# EUROPÄISCHE PATENTSCHRIFT

(11) **EP 1 227 731 B1**
(45) Veröffentlichungstag und Bekanntmachung des Hinweises auf die Patenterteilung: **06.10.2004**
(21) Anmeldenummer: 00981150.6
(22) Anmeldetag: 20.10.2000
(51) Int. Cl.: A22C 25/17

(54) **VORRICHTUNG ZUM ENTHÄUTEN VON BEHANDLUNGSGUT**
DEVICE FOR SKINNING MATERIAL TO BE TREATED
DISPOSITIF POUR DEPOUILLER UN PRODUIT A TRAITER

(30) Priorität: 22.10.1999 DE 19950975
(43) Veröffentlichungstag der Anmeldung: 07.08.2002
(73) Patentinhaber: Maja-Maschinenfabrik GmbH, 77694 Kehl-Goldscheuer (DE)
(72) Erfinder: SCHILL, Joachim, 77694 Kehl (DE)
(74) Vertreter: Lucht, Silvia
(86) Internationale Anmeldenummer: PCT/DE2000/003705
(87) Internationale Veröffentlichungsnummer: WO 2001/030166

(56) Entgegenhaltungen:
- DE-A- 2 258 126
- DE-A- 4 227 233
- GB-A- 636 371
- US-A- 2 601 292
- US-A- 4 063 332

## Beschreibung

Die Erfindung geht aus von einer Vorrichtung zum Enthäuten von Behandlungsgut nach dem Oberbegriff des Ansprüchs 1.

Derartige Vorrichtungen dienen dazu, von einem Behandlungsgut, insbesondere von Fischstücken oder Fischfilets, unerwünschte Schichten, wie beispielsweise Fett oder Haut abzutrennen. Hierzu wird das Behandlungsgut mit Hilfe einer Zugwalze erfasst und gegen das Schneidelement einer Schneideinheit gepresst. Bei dem Schneidelement handelt es sich beispielsweise um eine Klinge. Durch Rotation der Zugwalze wird das Behandlungsgut relativ zum Schneidelement bewegt und die unerwünschte Schicht von dem Behandlungsgut durch das Schneidelement abgetrennt.

Bekannte Zugwalzen weisen entlang ihrer Rotationsachse einen konstanten Durchmesser auf. Da der Abstand zwischen der Zugwalze und dem Schneidelement ebenfalls über die gesamte Länge der Zugwalze konstant ist wird von dem Behandlungsgut eine gleichmäßig dicke Schicht abgetrennt.

Dies ist insbesondere bei Fischfilets von Nachteil, da bei diesen in der Mitte die abzutrennende Schicht häufig dicker ist als am Rand. Die Verwendung bekannter Zugwalzen und bekannter Vorrichtungen zur Enhäutung führt daher häufig dazu, dass entweder ein Teil der unerwünschten Schicht in der Mitte des Fischfilets verbleibt oder aber am Randbereich des Fischfilets eine zu dicke Schicht abgetrennt wird.

Aus der US-A-2 601 292 ist eine Vorrichtung zum Enthäuten von Fischen bekannt, bei der einer Schneideinheit mittels Fördermitteln ein zu enthäutendes Fischstück zugeführt wird, das mittels einer Führungswalze gegen die Klinge der Schneideinheit gedrückt wird. Die Führungswalze weist dabei Bereiche mit gegenüber dem Hauptdurchmesser verringertem Durchmesser auf, um der unterschiedlichen Ausbildung der Fettschicht über der Breite des Fischstückes Rechnung zu tragen. Das Zuführen der Fischstücke wird über einen Zugmechanismus mit Klemmen bewirkt. Es erfordert ein kurzzeitiges vertikales Verfahren der Führungswalze, um die Klemmen passieren zu lassen. Als nachteilig erweist sich, dass der Transport des Fischstücks kompliziert und aufwändig ist. Darüber hinaus ist keine Möglichkeit zur Reinigung der Führungswalze gegeben.

Aus der DE 42 27 233 A ist eine Enthäutungs- und Abschwartungsmaschine bekannt, bei der eine Zahnwalze zur Zuführung des zu behandelnden Gutes dient und als Zugwalze ausgebildet ist. Eine zusätzliche Reinigungswalze dient dazu, die an der Zahnwalze haftenden Teile zu entfemen. Als nachteilig erweist sich hierbei, dass die Maschine nicht zum Enthäuten von Fischen geeignet ist, und dass die Reinigung durch die Reinigungswalze nicht gründlich ist.

Aus der DE 22 58 126 A ist eine Schneidmaschine für Speck bekannt, deren Zugwalze zum Transport der bereits abgetrennten Schwarte mit Ringnuten ausgestattet ist. Als nachteilig erweist sich hierbei, dass die Zugwalze nicht primär zum Transport des Behandlungsgutes und nicht zum Enthäuten von Fischen geeignet ist.

Demgegenüber hat die erfindungsgemäße Vorrichtung zum Enthäuten von Behandlungsgut mit den kennzeichnenden Merkmalen des Anspruchs 1 den Vorteil, dass die Zugwalze einen Bereich mit einem geringeren Durchmesser als die übrigen Zugwalzenabschnitte aufweist und damit über die gesamte Oberfläche des Behandlungsgutes eine Tiefenenthäutung bewirkt, ohne dabei zuviel Abschnitt zu produzieren. Je nach Länge der Zugwalze können entweder ein Bereich mit geringerem Durchmesser oder mehrere Bereiche geringeren Durchmessers vorgesehen sein. Diese Bereiche befinden sich jeweils an denjenigen Stellen der Zugwalze, an denen das Behandlungsgut, wie beispielsweise die Fischfilets, von der Zugwalze erfasst werden. Bei Zugwalzen mit nur einem Bereich geringeren Durchmessers ist dieser in der Mitte der Zugwalze angeordnet. Sind mehrere Bereiche geringeren Durchmessers vorgesehen, so sind diese über die Zugwalze entlang der Achse verteilt. Die Bereiche geringeren Durchmessers weisen üblicherweise eine Breite von ungefähr 100 mm auf. Die Unterschiede zwischen den Durchmessern sind sehr gering. Sie betragen üblicherweise weniger als 2 mm. Dies hängt jedoch vom jeweiligen Behandlungsgut ab. Zur Enthäutung von Lachs ist beispielsweise ein Unterschied zwischen den Bereichen geringeren und normalen Durchmessers von beispielsweise 1,6 mm geeignet, um eine Tiefenenthäutung im Mittelteil des Fisches zu erreichen.

Die Zugwalze weist senkrecht zu ihrer Achse verlaufende Ringnuten auf. Es können auch durchgehende Nuten mit oder ohne senkrecht dazu verlaufenden Rillen vorgesehen sein.

Mit geeigneten Kämmen kann das in diese Ringnuten eindringende Behandlungsgut von der Zugwalze entfernt werden. Außerdem kann die Oberfläche der Zugwalze zahnartig ausgebildet sein, so dass das Behandlungsgut zuverlässig von der Zugwalze erfasst und gegen die Schneideinheit gepresst werden kann.

Weitere Vorteile und vorteilhafte Ausgestaltung der Erfindung sind der nachfolgenden Beschreibung, der Zeichnung und den Ansprüchen entnehmbar.

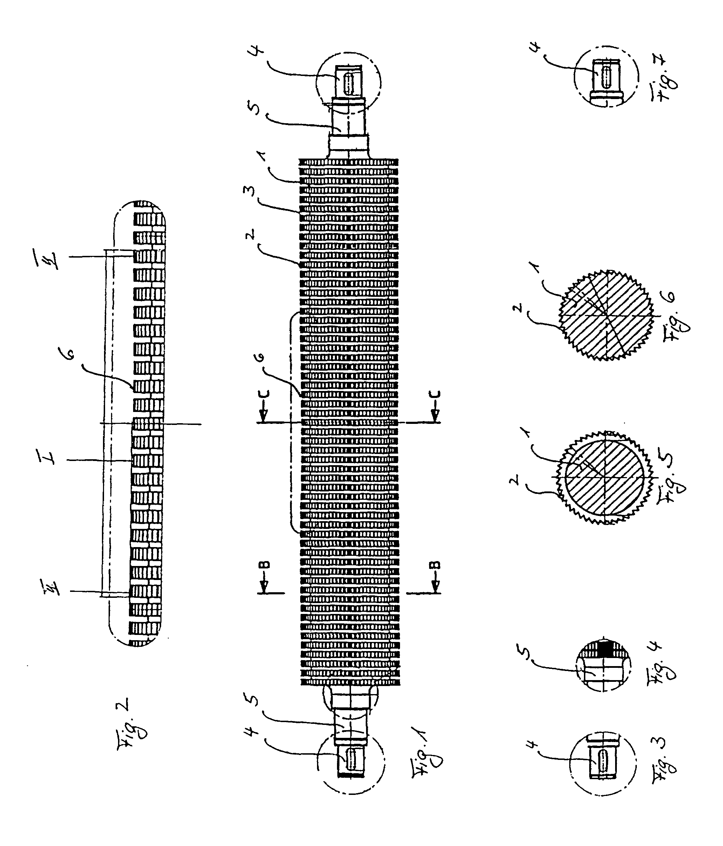

In Figur 1 ist eine Zugwalze 1 in einer Ansicht von oben dargestellt. Sie weist eine zahnartige Oberfläche 2 und transversal verlaufende Ringnuten 3 auf. Über Aufhängungen 4 an der Achse 5 der Zugwalze wird diese an dem Gestell einer Vorrichtung zum Enthäuten von Behandlungsgut aufgehängt. Dieses Gestell und eine Vorrichtung zur Enthäutung sind in der Zeichnung nicht dargestellt. In der Mitte weist die Zugwalze einen Abschnitt 6 mit geringerem Durchmesser als an den Rändern auf.

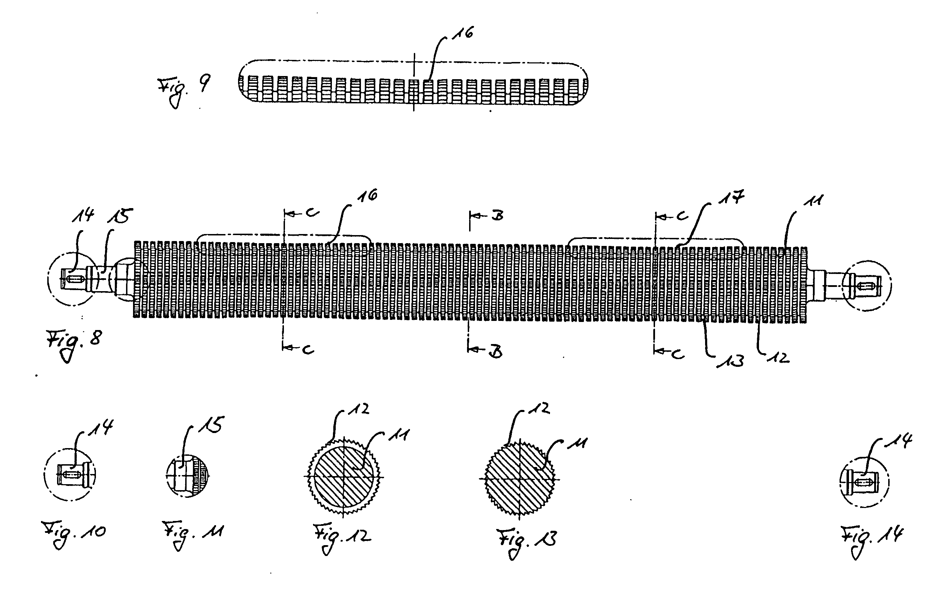

Figur 2 zeigt einen Ausschnitt aus Figur 1. Dieser Ausschnitt ist in Figur 1 mit einer strichpunktierten Linie markiert. Der Durchmesser der Zugwalze beträgt an der mit I markierten Stelle 73,6 mm, während der Durchmesser an den mit II markierten Stellen 75,2 mm beträgt. Damit beträgt die Differenz der beiden Durchmesser 1,6 mm. Dieser Unterschied reicht aus, um in der Mitte der Walze einen Tiefenenthäutung des Behandlungsgutes, insbesondere der Fischfilets zu erreichen. Je nach Anwendung und dem Behandlungsgut kann der Unterschied auch größer oder kleiner sein.

Der Abschnitt 6 geringeren Durchmessers liegt zwischen den beiden mit II markierten Pfeilen.

Die Figuren 3, 4, 5, 6 und 7 zeigen jeweils Details bzw. Schnittdarstellungen der Zugwalze aus Figur 1.

In den Figuren 8 bis 14 ist ein zweites Ausführungsbeispiel einer Zugwalze 11 mit einer zahnartigen Oberfläche 12 und transversal verlaufende Ringnuten 13 dargestellt. Über Aufhängungen 14 an der Achse 15 der Zugwalze wird diese an dem Gestell einer Vorrichtung zum Enthäuten von Behandlungsgut aufgehängt. Dieses Gestell und eine Vorrichtung zur Enthäutung sind in der Zeichnung nicht dargestellt. Im Unterschied zu der in den Figuren 1 bis 7 gezeigten Zugwalze 1 sind bei der Zugwalze 11 zwei Abschnitte 16 und 17 mit geringerem Durchmesser vorgesehen. Die Zugwalze 11 ist länger als die Zugwalze 1. Dank der beiden Abschnitte 16 und 17 können in derselben Zeit mehr Fischfilets bearbeitet werden als mit der Zugwalze 1.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Zugwalze
- 2: zahnartige Oberfläche
- 3: Ringnuten
- 4: Aufhängung
- 5: Achse
- 6 7 8 9 10: Abschnitt geringeren Durchmessers
- 11: Zugwalze
- 12: zahnartige Oberfläche
- 13: Ringnuten
- 14: Aufhängung
- 15: Achse
- 16: Abschnitt geringeren Durchmessers
- 17: Abschnitt geringeren Durchmessers

## Patentansprüche

1. Vorrichtung zum Enthäuten von Behandlungsgut wie Fisch oder dergleichen,
mit einer Schneideinheit und
mit einer das Behandlungsgut zur Schneideinheit transportierenden Zugwalze, welche das Behandlungsgut der die Haut abtrennenden Schneideinheit zuführt und das Behandlungsgut an das Schneidelement der Schneideinheit anpreßt,
**dadurch gekennzeichnet,**
**daß** die Zugwalze (1, 11) einen oder mehrere Abschnitte (6, 16, 17) aufweist, deren Durchmesser geringer ist als derjenige der übrigen Zugwalze, und
**daß** die Zugwalze (1, 11) senkrecht zu ihrer Achse verlaufende Ringnuten (3, 13) aufweist.

2. Vorrichtung nach Anspruch 1, **dadurch gekennzeichnet, daß** der oder die Abschnitte (6, 16, 17) eine Breite von ungefähr 100 mm aufweisen.

3. Vorrichtung nach Anspruch 1 oder 2, **dadurch gekennzeichnet, daß** der Unterschied der Durchmesser weniger als 2 mm berägt.

4. Vorrichtung nach einem der vorhergehenden Ansprühe, **dadurch gekennzeichnet, daß** die Oberfläche (2, 12) der Zugwalze (1, 11) zahnartig ausgebildet ist.

## Claims

1. Device for skinning processing material such as fish or the like,
with a cutting unit and
with a calender roller transporting the processing material to the cutting unit, conveying the processing material to the cutting unit cutting off the skin and pressing the processing material against the cutting element of the cutting unit,
**characterised in that**
the calender roller (1, 11) has one or more sections (6, 16, 17) whose diameter is less than that of the remaining calender roller, and
that the calender roller (1, 11) has annular grooves (3, 13) running parallel to its axis.

2. Device according to claim 1, **characterised in that** the section or sections (6, 16, 17) has or have a width of approximately 100 mm.

3. Device according to claim 1 or 2, **characterised in that** the difference in the diameters is less than 2 mm.

4. Device according to one of the previous claims, **characterised in that** the surface (2, 12) of the calender roller (1, 11) has a dentiform design.

## Revendications

1. Dispositif pour dépouiller un produit à traiter tel du poisson ou produit similaire, équipé d'une unité de découpage et
d'un rouleau d'entraînement transportant le produit à traiter jusqu'à l'unité de découpage, celui-ci acheminant le produit à traiter jusqu'à l'unité de découpage qui enlève la peau et pressant le produit à traiter contre l'élément de découpage de l'unité de découpage,
**caractérisé par le fait**
**que** le rouleau d'entraînement (1, 11) présente une ou plusieurs parties (6, 16, 17) dont le diamètre est inférieur à celui du reste du rouleau d'entraînement et par le fait que le rouleau d'entraînement (1, 11) présente des rainures circulaires (3, 13) disposées perpendiculairement à son axe.

2. Dispositif aux termes de la revendication 1, **caractérisé par le fait que** la ou les parties (6, 16, 17) ont une largeur d'approximativement 100 mm.

3. Dispositif aux termes de la revendication 1 ou 2, **caractérisé par le fait que** la différence entre les diamètres est inférieure à 2 mm.

4. Dispositif aux termes de l'une des revendications susmentionnées, **caractérisé par le fait que** la surface (2, 12) du rouleau d'entraînement (1, 11) est dentelée.
